# EUROPÄISCHE PATENTSCHRIFT

(11) **EP 3 289 262 B1**
(45) Veröffentlichungstag und Bekanntmachung des Hinweises auf die Patenterteilung: **25.03.2020**
(21) Anmeldenummer: 16721387.5
(22) Anmeldetag: 27.04.2016
(51) Int. Cl.: F16K 47/04, F16K 47/08, F16K 47/06, F16K 47/12, F16L 55/027

(54) **DROSSELKÖRPER MIT MEHREREN RAUMSPIRALFÖRMIG VERLAUFENDEN KANÄLEN**
THROTTLE BODY HAVING A PLURALITY OF HELICAL CHANNELS
CORPS D'ÉTRANGLEMENT COMPRENANT PLUSIEURS CANAUX S'ÉTENDANT EN FORME DE SPIRALE SPATIALE

(30) Priorität: 30.04.2015 DE 102015005611
(43) Veröffentlichungstag der Anmeldung: 07.03.2018
(73) Patentinhaber: Samson Aktiengesellschaft, 60314 Frankfurt am Main (DE)
(72) Erfinder: SANDER, Andreas, 69514 Laudenbach (DE); VNUCEC, Domagoj, 68549 Ilvesheim (DE); WETZSTEIN, Nadine, 60594 Frankfurt am Main (DE)
(74) Vertreter: Schmid, Nils T.F.
(86) Internationale Anmeldenummer: PCT/EP2016/059440
(87) Internationale Veröffentlichungsnummer: WO 2016/174107

(56) Entgegenhaltungen:
- EP-A2- 1 456 571
- EP-A2- 2 716 953
- WO-A1-2004/106792
- DE-A1- 2 457 560
- DE-A1- 10 332 262
- DE-A1-102006 045 650
- DE-T2- 69 914 643
- KR-A- 20140 136 099
- US-A1- 2005 199 298
- US-A1- 2009 183 790
- US-A1- 2013 291 980

## Beschreibung

Die Erfindung betrifft einen Drosselkörper in Form eines Ventilkäfigs oder eines Drosselkolbens zum Reduzieren des Fluiddrucks, insbesondere zum Anordnen, in einer Prozessfluidleitung einer prozesstechnischen Anlage, beispielweise der Petrochemie, der Lebensmittelindustrie, der Energiewirtschaft oder dergleichen. Drosselkörper werden häufig an einem Stellventil vorgesehen, zum Beispiel als hülsenförmiger sogenannter Ventilkäfig unmittelbar angrenzend an einem beweglichen Ventilglied zum Einstellen der Ventil-Durchflussmenge oder in Form einer sogenannten Festdrossel im Verlauf der Prozessfluidleitung stromaufwärts oder stromabwärts des Ventilglieds.

Der Drosselkörper ist mit mehreren Kanälen versehen, die sich von einem stromaufwärtigen Kanaleintritt zu einem stromabwärtigen Kanalaustritt erstrecken. Um den Drosselkörper zu passieren, muss das Prozessfluid durch dessen Kanäle strömen. Der Drosselkörper realisiert somit einen Strömungswiderstand für das Prozessfluid, in dem ein Teil der Energie des Fluids, insbesondere der kinetischen Energie und/oder der Druckenergie des Fluids, abgebaut wird, so dass der Druck des Prozessfluids stromabwärts des Drosselkörpers niedriger ist als stromaufwärts des Drosselkörpers.

Drosselkörper werden üblicherweise eingesetzt, um Stellventile vor starkem Verschleiß zu schützen, wenn verschleißfördernde Prozessbedingungen vorliegen. Solche verschleißfördernde Prozessbedingungen treten beispielsweise auf, wenn in einer Prozessfluidleitung, beispielsweise an einem Ventil, sehr hohe lokale Differenzdrücke auftreten. Sehr hohe lokale Differenzdrücke sind besonders bei gleichzeitig großen Massenströmen problematisch sowie unabhängig vom Massenstrom erfahrungsgemäß ab etwa 40 bar Druckgradient. Ferner liegen verschleißfördernde Prozessbedingungen auch bei Mehrphasenströmungen vor, wenn neben einer flüssigen Phase in dem Prozessfluid auch eine Festkörper- und/oder eine Gasphase vorliegt. In Abhängigkeit von den Eigenschaften des Prozessfluids, insbesondere dessen Dampfdruck, kann es in einer Prozessfluidleitung zu Kavitation kommen, wodurch Verschleiß und Lärmentwicklung stark erhöht werden. Kavitation kann aber auch dann auftreten, wenn bebereits eine Mehrphasenströmung beispielsweise in Form eines dampfförmigen Prozessfluids vorliegt. Ist prozessbedingt ein Absenken des Fluiddrucks unterhalb dessen Dampfdruck erforderlich, führt dies zum sogenannten "Flashing-Betrieb", bei dem das Prozessfluid aus einem einphasigen Flüssigzustand in einen zweiphasigen Zustand mit Flüssig- und Gasphase überführt wird, wobei neben Kavitation auch Stoßwellen auftreten können.

Der Einsatz mehrerer Festdrosseln stromaufwärts eines Stellventils zum Schutz des Stellventils, insbesondere vor Kavitation, ist aus der Samson-Firmendruckschrift "Der Feind im Ventil - kritische Betriebszustände bei Stellventilen" (Sonderdruck aus "atp - Automatisierungstechnische Praxis", Jahrgang 44, Heft 7, 2002 von Dr. Ralf Herbrich) bekannt.

Aus WO 2011/118863 A1 ist ein Drosselkörper bekannt, mit dem der Fluiddruck in einer Prozessfluidleitung abgesenkt wird, wobei versucht werden soll, Nebenerscheinungen der Druckabsenkung, wie Kavitation und Geräuschentwicklung, gering zu halten. Dazu besteht der Drosselkörper aus mehreren ineinander geschachtelten Hülsen, in die zueinander versetzte und unterschiedlich große Spaltöffnungen eingebracht sind, so dass das Prozessfluid einem mehrfach abknickenden Pfad durch die Spaltöffnungen des Drosselkörpers folgen muss. Durch die Knicke im Strömungspfad und die stufenartigen Größenunterschiede der Spaltquerschnitte zweier aufeinanderfolgender Hülsen kommt es in dem Drosselkörper lokal zu starken Druckschwankungen und somit unweigerlich zu Kavitation, was Verschleiß und Geräuschentwicklung im Drosselkörper erhöht.

Von DE 1 650 196 A ist ein Drosselkörper bestehend aus einer Vielzahl von aufeinandergestapelten hülsenförmigen Scheiben mit nutenartigen Kanälen bekannt, die in einer Hülsenebene kurvenförmig verlaufen, so dass keine plötzlichen Querschnittsänderungen in dem Drosselkörper vorliegen, um das Auftreten von Kavitation weitestgehend zu vermeiden. Die Drucksenkung in dem Drosselkörper wird vornehmlich durch Wandreibung des Fluids in den Nuten bewirkt. Bei einem kompakten Drosselkörper kann allerdings nur entweder eine große Druckreduktion bei geringem Massenstrom erfolgen oder bei hohem Massenstrom eine lediglich geringfügige Druckreduktion.

DE 699 14 643 T2 betrifft ein Sperrventil für hohe Differenzdrücke.

Ein Drosselkörper gemäß dem Oberbegriff des Anspruchs 1 ist aus dem Dokument US 2005/0199298 A1 bekannt.

Es ist eine Aufgabe der Erfindung, die Nachteile des Stands der Technik zu überwinden, insbesondere einen Drosselkörper zum Reduzieren des Fluiddrucks in einer Prozessfluidleitung einer prozesstechnischen Anlage dahingehend zu verbessern, dass bei einer kompakten Bauweise auch bei großem Durchflussvolumen eine starke Reduktion des Fluiddrucks bewirkt

wird, wobei Verschleiß, insbesondere aufgrund von Kavitation, weitestgehend vermieden wird.

Diese Aufgabe wird durch die Merkmale von Anspruch 1 gelöst.

Danach ist erfindungsgemäß vorgesehen, einen Drosselkörper zum Reduzieren des Fluiddrucks insbesondere in einer Prozessfluidleitung einer prozesstechnischen Anlage, beispielsweise der Petrochemie, der Lebensmittelindustrie, der Energietechnik oder dergleichen, insbesondere zum Anordnen in der Prozessfluidleitung bereitzustellen. Der Drosselkörper ist mit mehreren sich von einem stromaufwärtigen Kanaleintritt zu einem stromabwärtigen Kanalaustritt verlaufenden Kanälen versehen, wobei ein zumindest abschnittsweise gekrümmter Verlauf wenigstens eines der mehreren Kanäle zwischen dem Kanaleintritt und dem Kanalaustritt von einer ebenen Erstreckung abweicht. Es sei klar, dass insbesondere geradlinige Kanäle sich zwischen ihrem Kanaleintritt und ihrem Kanalaustritt nur in einer Ebene erstrecken, die durch eine beliebige zu der Kanalverlaufsgeraden senkrecht orientierte zweite Gerade definiert sein kann.

Kanäle mit gekrümmtem Verlauf innerhalb einer Ebene sind beispielsweise von der eingangs erwähnten DE 1 650 196 A bekannt. Die Kanäle gemäß DE 1 650 196 A verlaufen abweichend von einer Gerade gekrümmt, jedoch definieren jeweils Kanaleintritt und Kanalaustritt zusammen mit der von der Eintritts-Austritts-Geraden abweichenden Krümmung eine Ebene, in der der komplette Verlauf eines Kanals liegt. Insbesondere kann eine Ebene horizontal und/oder senkrecht bezüglich einer Hülsenmittelachse eines so genannten Ventilkäfigs definiert sein, beispielsweise eine Scheibenebene entsprechend DE 1 650 196 A bilden. Eine ebene Erstreckung kann auch als 2-dimensionale Erstreckung bezeichnet sein. Eine derartige 2-dimensionale Erstreckung kann insbesondere vorliegen, wenn eine planare oder ebene Schnittfläche durch einen Drosselkörper gelegt werden kann, die den Kanalverlauf vollständig abbildet.

Ein zumindest abschnittsweise gekrümmter Verlauf, der von einer ebenen Erstreckung abweicht, kann auch bezeichnet werden als Verlauf, der von einer geradlinigen Erstreckung in zwei Raumrichtungen abweicht, oder als dreidimensionaler Verlauf. Insbesondere sei klar, dass eine Abweichung von einer ebenen Erstreckung bzw. eine Dreidimensionalität des Verlaufs nicht bereits aufgrund der sich notwendigerweise quer zum Verlauf ausdehnenden Querschnittsfläche des Kanals vorhanden ist.

Bei dem erfindungsgemäßen Drosselkörper kann der Verlauf derart gekrümmt sein, dass die Krümmungsradien des Kanalverlaufs insbesondere in dem gesamten Verlauf vom Kanaleintritt zum Kanalaustritt, der in Abhängigkeit von dem Prozessfluid, insbesondere dessen Viskosität, Dichte, Temperatur und Zusammensetzung, den Prozessbedingungen, insbesondere Fluiddruck und Fluidgeschwindigkeit, und dem Kanalquerschnitt, insbesondere dessen Form und Maße, derart bemessen ist, dass das Auftreten von Kavitation im Wesentlichen vollständig vermieden wird. Es sei klar, dass Fluid sowohl homogene Fluide als auch heterogene Gemische bezeichnen kann, die eine Flüssig- und/oder eine Gasphase sowie gegebenenfalls eine Festkörperphase aufweisen können. Der Verlauf des wenigstens einen Kanals ist zumindest abschnittsweise kontinuierlich und stufen- oder sprungfrei.

Vorzugsweise windet sich der zumindest abschnittsweise gekrümmte Verlauf des wenigstens einen Kanals längs einer Raumlinie im Drosselkörper um eine insbesondere geradlinige Windungsachse. Eine gedachte Windungsachse kann sich vorzugsweise geradlinig zwischen dem Kanaleintritt und dem Kanalaustritt erstrecken. Vorzugsweise ist die Windungsachse lotrecht zu der Außenwandfläche des Außenkörpers an dem jeweiligen Kanaleintritt und/oder Kanalaustritt. Die Windungsachse kann allerdings auch selbst zur Vergrößerung des Kanalwegs vom Kanaleintritt zum Kanalaustritt einen gekrümmten bzw. spiralförmigen Verlauf aufweisen. Insbesondere ist ein Radialabstand zwischen der Windungsachse und der Raumlinie konstant, der Radialabstand kann sich aber auch in Axialrichtung kontinuierlich erhöhen oder verringern, wobei symmetrische gewundene Strukturen, beispielsweise Spiralstrukturen, wie konische, insbesondere mit abwechselnder an- und absteigender Konizität, oder zylindrische Raumspiralen bevorzugt sein können, um ein Dämpfungsverhalten des Drosselkörpers einfacher vorhersehen zu können. Insbesondere können eine Windungskrümmung und/oder eine Windungssteigung relativ zu der Axialrichtung konstant sein, sich erhöhen und/oder verringern.

Bei einer bevorzugten Ausführung der Erfindung ist für den Verlauf des wenigstens einen Kanals oder der mehreren Kanäle zwischen dem Kanaleintritt und dem Kanalaustritt sicherzustellen, dass der Kanalgang keine Innenkontursprünge oder Stufen aufweist, in denen eine Strömungsverwirbelung verursacht wird. Vielmehr soll vorzugsweise der Verlauf des Kanalgangs, der abschnittsweise raumspiralförmig ist, sich stets kontinuierlich erstrecken und in dessen Verlauf sprung- und stufenfrei sein.

Bei einer bevorzugten Ausführung der Erfindung ist der zumindest abschnittsweise gekrümmte Verlauf des wenigstens einen Kanals raumspiralförmig und/oder hat zumindest eine voll umlaufende Windung um eine Windungsachse. Die Raumspiralform oder zumindest eine voll umlaufende Windung um eine Windungsachse des wenigstens einen Kanals oder der mehreren, insbesondere zumindest 10, vorzugsweise mindestens 100, Kanäle bewirkt eine deutliche Verlängerung des Kanalwegs, wodurch eine deutliche Erhöhung der Drosseleigenschaft des Drosselkörpers erreicht wird. Vorzugsweise folgt der zumindest abschnittsweise gekrümmte Verlauf einer zylindrischen Raumspiralform, wie einer Schraubenlinie mit konstanter Steigung und konstantem Radialabstand.

Bei einer bevorzugten Ausführung der Erfindung ist der Kanalgang am Kanaleintritt geradlinig, wobei die lineare Spiralachse im Wesentlichen mit dem Kanalzentrum zusammenfällt. Unmittelbar nach dem Kanaleintritt oder nach einer geradlinigen Kanaleintrittsstrecke kann vorzugsweise eine Spiralkrümmung aufgenommen werden, so dass sich um die geradlinige Spiralachse der spiralförmige Kanalgang bildet. Der radiale Abstand des Kanalverlaufs zur Spiralachse oder auch Spiralradius kann zunehmen und insbesondere maximal werden, wenn die in Strömungsrichtung liegende Mitte des Drosselkörpers erreicht wird. An dieser Stelle kann das Spiralradiusmaximum vorliegen. Die Steigung kann dort kontinuierlich fortgesetzt werden oder von dem Spiralradiusmaximum wieder abnehmen, so dass im Kanalaustritt das Zentrum des Kanalgangs wieder mit der geradlinigen Spiralachse zusammenfällt. Auch im Kanalaustritt kann zumindest ein kurzer Kanalabschnitt geradlinig sein, so dass das Prozessfluid den Kanal in einer im Wesentlichen lotrechten Richtung zur Außenseite des Drosselkörpers verlässt.

Bevorzugt kann der Verlauf des wenigstens einen Kanals zumindest kanaleintrittsseitig aber auch raumspiralförmig mit zunehmendem oder abnehmendem Radialabstand oder schraubenförmig sein. Bei einer anderen bevorzugten Ausführungsform, die mit vorigen kombiniert sein kann, kann der Verlauf zumindest austrittsseitig schraubenförmig oder raumspiralförmig mit abnehmendem oder zunehmendem Radialabstand sein. Insbesondere in einem Mittelabschnitt des Verlaufs ist wenigstens eine vollständige Windung vorgesehen, insbesondere eine vollständige Schraubenwindung mit konstanter Steigung und/oder konstantem Radialabstand. Es können in einem Mittelbereich auch mehrere aufeinanderfolgende vollständige Windungen, insbesondere Schraubenwindungen, vorgesehen sein. Im Hinblick auf eine möglichst lange Strecke vom Kanaleintritt zum Kanalaustritt ist es vorteilhaft, eine möglichst hohe Anzahl von Windungen vorzusehen.

Bei einer bevorzugten Ausführung der Erfindung verläuft der jeweilige Kanal im Raumspiralabschnitt mit wenigstens einer 360°- Windung helix- oder schraubenartig um eine Helix- oder Schraubenachse. Bei der bevorzugten Ausführung des Drosselkörpers kann die schraubenartige wenigstens eine Windung mit konstanter Krümmung relativ zu der Schraubenachse verlaufen, insbesondere mit gleichbleibendem Krümmungsradius, so dass sämtliche Krümmungspunkte des schraubenartigen raumspiralförmigen Verlaufs auf der Schraubenachse liegen. Bei der bevorzugten Ausführungsform der Erfindung kann auch die Steigung der wenigstens einen schraubenartigen Windung konstant relativ zu der Windungs- oder Schraubenachse sein, so dass bei gleichzeitig konstantem Krümmungsradius eine konstante Teilung, das heißt: Ein konstanter Abstand zwischen zwei aufeinanderfolgenden Windungen, erreicht sein kann. In dem abschnittsweise gekrümmten Verlauf können mehrere Windungen vorgesehen sein, vorzugsweise zumindest fünf, insbesondere sechs oder sieben Windungen. Insbesondere weist ein abschnittsweise gekrümmter Verlauf höchstens etwa 100, höchstens etwa 50, höchstens etwa 20 oder höchstens etwa 10 Windungen auf. Insbesondere weist ein abschnittsweise gekrümmter Verlauf wenigstens etwa 5 Windungen, wenigstens etwa 10, wenigstens etwa 20 oder wenigstens etwa 50 Windungen auf.

Bevorzugt ist der zumindest abschnittsweise gekrümmte Verlauf des wenigstens einen Kanals raumspiralförmig und weist einen Bereich mit abnehmender und/oder zunehmender Steigung und/oder konstanter Schraubensteigung auf. Beispielsweise kann bei gleichzeitig steigendem Radialabstand die Steigung eines abschnittsweise raumspiralförmig verlaufenden Kanals sinken, so dass die Teilung des Abschnitts, also der Abstand zweier benachbarter Windungen eines Kanals, konstant bleibt. Gleichermaßen kann bei in Axialrichtung verringertem Radialabstand die Steigung zunehmen, so dass die Teilung konstant bleibt.

Vorzugsweise hat der Drosselkörper einen der mehreren Kanäle, der im Verlauf vom Kanaleintritt zum Kanalaustritt zumindest streckenweise eine kleiner werdende Steigung aufweist. So kann der Kanalverlauf beispielsweise im Wesentlichen lotrecht zu der am Kanaleintritt angrenzenden Außenfläche orientiert sein. Des Weiteren können bei einer kleiner werdenden Steigung mehrere aufeinanderfolgende Windungen eines Kanals im Verlauf des Kanals nah aneinander angeordnet sein, so dass eine kleiner werdende Teilung realisiert ist. Dadurch können nahe des Kanaleintritts wenige leicht gekrümmte Windungen und im weiteren Kanalverlauf nahe des Kanalaustritts in einem vergleichbaren Volumen des Drosselkörpers eine größere Anzahl stärker gekrümmter Windungen angeordnet sein. Dadurch kann gewährleistet werden, dass der Druckverlust im Prozessfluid im Wesentlichen durch Wandreibung in dem Kanal erfolgt. Die Steigung kann auch streckenweise größer werden. Insbesondere wird die Steigung kontinuierlich kleiner oder größer, damit der jeweilige Kanal in seinem Verlauf frei von Steigungssprüngen bzw. Knicken sein kann.

Bei einer bevorzugten Ausführung der Erfindung ist der Verlauf des wenigstens einen Kanals zumindest kanaleintrittseitig raumspiralförmig mit zunehmender oder abnehmender Krümmung. Alternativ kann der Verlauf zumindest austrittsseitig raumspiralförmig mit abnehmender oder zunehmender Krümmung sein. Insbesondere ist in einem Mittelabschnitt des Verlaufs wenigstens eine vollständige Windung, insbesondere eine vollständige Schraubenwindung mit konstanter Krümmung, vorgesehen. Zur Vermeidung von Krümmungssprüngen oder -knicken im jeweiligen Kanalverlauf wird die Kanalverlaufskrümmung vorzugsweise kontinuierlich stärker und/oder schwächer. Insbesondere am Kanaleintritt kann die Krümmung stärker werden, so dass der Kanal zunächst geradlinig verläuft und der geradlinige Verlauf vorzugsweise kontinuierlich in den raumspiralförmigen, insbesondere schrauben- oder helixartig gewundenen, Abschnitt übergeht. Dadurch kann besonders am Kanaleintritt, an dem üblicherweise hohe Strömungsgeschwindigkeiten vorliegen, der Kanalverlauf erst allmählich in einen Raumspiralabschnitt übergehen, so dass Kavitation weitestgehend vermieden wird. Vorzugsweise wird die Krümmung innerhalb eines Raumspiralabschnitts stärker und/oder, gegebenenfalls anschließend, schwächer. Mit einem derartigen konischen raumspiralförmigen Verlauf kann beispielsweise bei einem hülsenförmigen Drosselkörper die Windung des Kanals im radialen Verlauf des Hülsenkörpers nach außen hin spiralförmig größer werden, also mit dem Radialabstand zur Hülsenachse zunehmen, um das Volumen des Drosselkörpers so weit als möglich auszunutzen. Vorzugsweise wird die Krümmung des Kanals am Kanalaustritt schwächer, so dass die Fluidströmung nicht unmittelbar aus einer Raumspiralstrecke mit starker Krümmung aus dem Kanalaustritt entlassen wird. So kann am Kanalaustritt ein wohldefinierter Strömungsverlauf erzeugt werden.

Vorzugsweise ist der Verlauf des wenigstens einen Kanals am Eintritt lotrecht zu einer am Kanaleintritt angrenzenden Außenfläche des Drosselkörpers. Der Verlauf des wenigstens einen Kanals kann zudem oder alternativ auch am Austritt lotrecht zu einer am Kanalaustritt angrenzenden Außenfläche des Drosselkörpers liegen. Es sei klar, dass beispielsweise bei einem Drosselkörper in Form einer Hülse, wie einem Ventilkäfig oder einem Drosselkolben, die lotrechte Orientierung der Spiral- oder Schraubenachse anhand der Hülsenmittelachse bestimmt werden kann. Bei scheibenförmigen Festdrosseln ist so gewährleistet, dass die Strömungsrichtung am Kanaleintritt bzw. am Kanalaustritt im Wesentlichen mit der Strömungsrichtung des Prozessfluids im stromaufwärtigen und/oder im stromabwärtigen Fluidbereich übereinstimmt. Bei hülsenförmigen Drosselkörpern ergibt sich durch eine lotrechte Kanalorientierung am Kanaleintritt und/oder am Kanalaustritt relativ zum Hülsenkörper eine im Wesentlichen radiale Strömungsrichtung.

Bevorzugt weist der mindestens eine Kanal einen vorzugsweise kreisförmigen Kanalquerschnitt auf, der insbesondere senkrecht zur Raumlinie des Verlaufs definiert sein kann. Denkbar sind aber auch von einer Kreisform abweichende Kanalquerschnitte, insbesondere ovale oder polygonale mit abgerundeten Ecken. Vorzugsweise kann die Fläche des Kanalquerschnitts zwischen dem Kanaleintritt und dem Kanalaustritt zumindest abschnittsweise insbesondere kontinuierlich zunehmen und/oder insbesondere kontinuierlich abnehmen. Zur Vermeidung von Querschnittssprüngen, die einen stufenartigen Kanalverlauf bedingen würden, wobei möglicherweise Kavitation an der Stufe nicht zu vermeiden wäre, wird die Fläche im Verlauf vom Kanaleintritt zum Kanalaustritt vorzugsweise kontinuierlich größer und/oder kleiner. Insbesondere am Kanalaustritt kann die Fläche des Kanalquerschnitts größer werden. Dadurch kann der Volumenexpansion des Prozessfluids wegen des Druckabbaus im Kanalverlauf Rechnung getragen werden.

Es hat sich als vorteilhaft herausgestellt, den Kanalquerschnitt im Verlauf des jeweiligen Kanals zu vergrößern, so dass der Volumenstrom, insbesondere die Fluidgeschwindigkeit, im Verlauf des Kanals zumindest nicht steigt und/oder so dass die Temperatur des Prozessfluids im jeweiligen Kanalverlauf nicht sinkt. Dadurch werden eventuelle Materialschädigungen durch die erhöhte Fluidgeschwindigkeit oder durch Rissbildung in dem Drosselkörper aufgrund eines Temperaturgradients des Drosselkörpermaterials vermieden.

Vorzugsweise kann ein Kanalquerschnitt am Kanaleintritt sich beispielsweise trichterförmig verjüngen und/oder sich am Kanalaustritt beispielsweise trichterförmig aufweiten, so dass am Kanaleintritt und/oder am Kanalaustritt ein kontinuierlicher Fluss oder Lauf des Fluids vom stromaufwärtigen Fluidbereich entlang der Drosselkörperaußenfläche in den Kanal hinein bzw. aus dem Kanal hinaus entlang der Drosselkörperaußenseite zum stromabwärtigen Fluidbereich gewährleistet werden.

Bei einer bevorzugten Ausführung der Erfindung gabelt sich der wenigstens eine Kanal in wenigstens zwei Kanaläste. Dabei kann insbesondere ein zumindest abschnittsweise gekrümmter Verlauf wenigstens eines der Kanaläste zwischen einer Kanalgabel und einer zweiten Kanalgabel, einem Kanalaustritt oder einem Kanaleintritt von einer ebenen Erstreckung abweichen. Für den von der ebenen Erstreckung abweichenden abschnittsweise gekrümmten Verlauf des wenigstens einen Kanalastes können die bereits bezüglich des Kanals genannten bevorzugten Verläufe relevant sein. Ein Kanal kann sich auch in 3, 4 oder mehr Kanaläste gabeln. Wird der Rohrradius bei einer erfindungsgemäß bevorzugten Gabelung eines Kanals in zwei oder mehr Kanalfortsätze verkleinert, kann in den Kanalfortsätzen aufgrund des relativ kleineren Kanalradius ein größerer Druckverlust auf gleicher Länge erfolgen, wie in einem größeren Kanalrohr. Dabei entwickelt sich die gesamte Querschnittsfläche vorzugsweise derart, dass die Summe der Querschnittsflächen der Kanalfortsätze, insbesondere am Beginn der Kanalfortsätze, zumindest genauso groß ist, wie die Querschnittsfläche des ursprünglichen Kanals, insbesondere vor der Gabelung. Auf diese Weise kann die Querschnittsfläche im Kanalverlauf wachsen, um einer Fluidexpansion Raum zu geben und gleichzeitig kann die Wandfläche deutlich erhöht werden. Die Kanalfortsätze weisen insbesondere jeweils zumindest einen eigenen Raumspiralabschnitt auf. Überaschenderweise wurde festgestellt, dass eine Erhöhung der Fluidgeschwindigkeit bei Verringerung des Kanalquerschnitts mittels Bereitstellung weiterer Kanalfortsätze kleinen Querschnitts vermieden werden kann.

Bei einer bevorzugten Ausführung der Erfindung kann sich der wenigstens eine Kanal der mehreren Kanäle in dessen Verlauf zwischen dem Kanaleintritt und dem Kanalaustritt in wenigstens zwei Kanalfortsetzungen oder Kanaläste aufgabeln. Die Kanalfortsetzungen können selbst jeweils einen raumspiralförmigen Gangverlauf aufweisen, wobei es auch vorstellbar ist, dass lediglich eine der wenigstens zwei Kanalfortsetzungen nach der Aufgabelung einen linear geradlinigen oder zweidimensionalen Verlauf aufweist. Vorzugsweise verlaufen die Kanalfortsetzungen parallel nebeneinander hin zur Austrittsseite des Drosselkörpers, können allerdings auch wieder zu einem gemeinsamen Kanalabschnitt, der wiederum raumspiralförmig sein kann, münden und zusammengeführt werden.

Vorzugsweise ist der zumindest abschnittsweise gekrümmte Verlauf von wenigstens zwei Kanälen oder gegebenenfalls wenigstens zwei Kanalästen raumspiralförmig mit im Wesentlichen gleichem Radialabstand und/oder im Wesentlichen gleicher Steigung umeinander und/oder um eine gemeinsame Windungsachse gewunden. Das umeinander Winden von abschnittsweise gekrümmten Verläufen von zwei oder mehr Kanalfortsätzen oder Kanälen ist insbesondere dann zur Ausnutzung des Drosselkörpervolumens günstig, wenn der Abstand zweier benachbarter Windungen eines Kanals ausreichend groß ist, um einen weiteren Kanal aufzunehmen. Umeinander gewundene Verläufe können vorzugsweise die Gestalt einer Doppel- oder Mehrfachhelix haben.

Bei einer bevorzugten Ausführung der Erfindung ist der Drosselkörper frei von geradlinigen Kanälen und/oder frei von Kanälen, deren Verlauf nicht von einer ebenen Erstreckung abweicht. Insbesondere sind alle Kanäle des Drosselkörpers im Wesentlichen deckungsgleich.

Bei einer weiteren bevorzugten Ausführung weist der Drosselkörper wenigstens zwei unterschiedliche Materialien oder Werkstoffe auf, durch die sich der wenigstens eine der mehreren Kanäle erstreckt. Die Verwendung unterschiedlicher Drosselkörpermaterialien erlaubt besonders verschleiß- und geräuscharm ausgelegte Drosselkörper. Insbesondere unterscheiden sich die Materialien oder Werkstoffe bezüglich deren jeweiligen Festigkeit, Härte und/oder Verschleißwiderstand. Insbesondere ist wenigstens einer der mehreren Kanäle aus einem dem zwei Werkstoffe gebildet und wenigstens ein anderer der mehreren Kanäle aus einem anderen der zwei Werkstoffe. Insbesondere ist ein Kanal durch zwei Werkstoffe gebildet.

Jeder Kanal hat einen eigenen Kanalverlauf mit einer Kanalmittelpunktlinie, die durch die Mittelpunkte von Querschnittsflächen des Kanals verläuft, die zwischen Kanaleintritt und Kanalaustritt hintereinander angeordnet sind, wobei Kanaleintritt und Kanalaustritt selbst jeweils eine Kanalquerschnittsfläche definieren können. Für die Beschreibung des Kanalverlaufs beispielsweise in einem kartesischen Koordinatensystem eignen sich beispielsweise Raumvektoren, die durch zwei Vektoren in der Ebene der Drosselkörperaußenfläche am Kanaleintritt und einen dritten, auf den beiden ersten Raumvektoren senkrecht stehenden Raumvektor, gebildet werden. Alternativ kann der Kanalverlauf auch anhand von sogenannten Stromlinien bzw. Stromfäden beschrieben wird, die der durch die Kanalgeometrie definierte Strömungsröhre folgen, wozu zum Beispiel die Eulersche oder Bernoullische Gleichung verwendet werden kann. Der jeweilige Kanalverlauf definiert den Verlauf der Fluidströmung in dem Kanal, sofern das Fluid den jeweiligen Kanal ausfüllt.

Weitere Eigenschaften, Vorteile und Merkmale der Erfindung werden durch die folgende Beschreibung von bevorzugten Ausführungen der Erfindung anhand der beiliegenden Zeichnungen deutlich, in denen zeigen:
- Figur 1a: eine Querschnittsansicht eines Ventils mit einem erfindungsgemäßen Drosselkörper in Form eines Ventilkäfigs;
- Figur 1b: eine Querschnittsansicht eines Ventils mit einem erfindungsgemäßen Drosselkörper in Form eines Drosselkolbens;
- Figur 2a: eine schematische Querschnittsansicht eines Ventils mit einem nicht erfindungsgemäßen Drosselkörper in Form einer Festdrossel;
- Figur 2b: eine schematische Querschnittsansicht der Festdrossel gemäß Figur 2a im Detail;
- Figur 3: einen schraubenartigen Raumspiralabschnitt eines Kanals für einen erfindungsgemäßen Drosselkörper;
- Figur 4: einen Kanal eines erfindungsgemäßen Drosselkörpers, der sich in seinem Verlauf in zwei Kanalfortsätze aufspaltet;
- Figur 5a: ein helixartig gewundener Kanal eines erfindungsgemäßen Drosselkörpers, dessen Steigung im Verlauf zwischen Kanaleintritt und Kanalaustritt kleiner wird;
- Figur 5b: einen anderen helixartig gewundenen Raumspiralabschnitt eines Kanals eines erfindungsgemäßen Drosselkörpers, bei dem die Steigung sinkt und die Fläche des Kanalquerschnitts sich vergrößert;
- Figur 6: ein Teil eines Kanals eines erfindungsgemäßen Drosselkörpers mit einem schraubenartig gewundenen Raumspiralabschnitt und einem Eintrittsbereich;
- Figur 7: ein helixartig gewundener Raumspiralabschnitt eines Kanals eines erfindungsgemäßen Drosselkörpers, bei dem die Spiralachse ebenfalls helixartig gewunden ist; und
- Figur 8: zwei umeinander gewundene Raumspiralabschnitte von Kanälen eines erfindungsgemäßen Drosselkörpers.

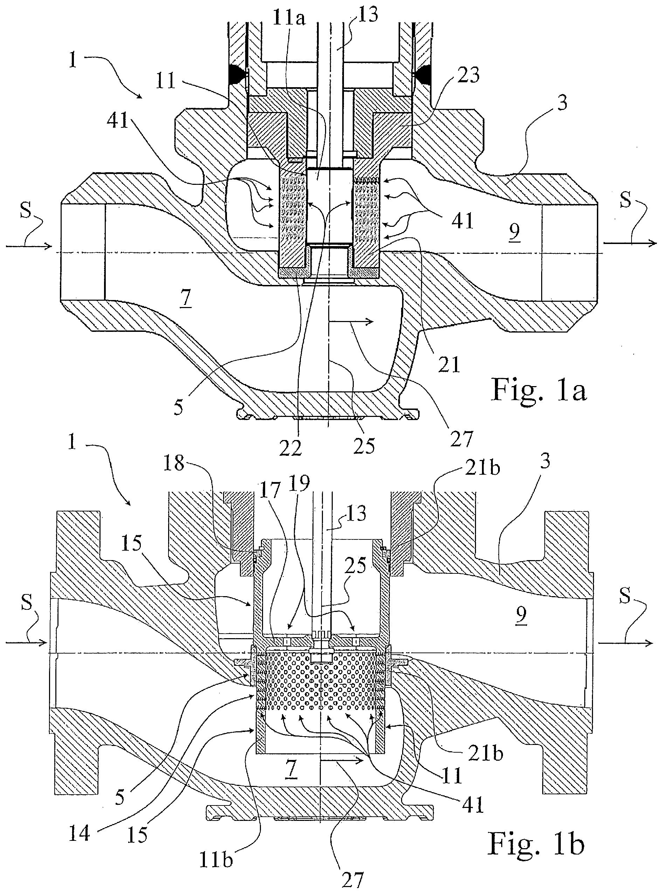

In den Figuren 1a und 1b sind bevorzugte Ausführungen von erfindungsgemäßen Drosselkörpern dargestellt. Dabei ist im Allgemeinen ein Ventil mit der Bezugsziffer 1 versehen. Das Ventil 1 umfasst ein Ventilgehäuse 3, an dem ortsfest ein Ventilsitz 5 vorgesehen ist, der mit einem Ventilglied 11 kooperiert, das über eine Ventilstange 13 angesteuert ist.

Die Figuren 1a und 1b zeigen jeweils erfindungsgemäße Drosselkörper, die in Figur 1a als Ventilkäfig 21 und in Figur 1b als Drosselkolben 11b realisiert sind. Die Strömungsrichtung des Prozessfluids durch die Prozessfluidleitung ist durch einen Pfeil S gekennzeichnet. Es sei klar, dass die Strömungsrichtung auch in der umgekehrten Richtung verlaufen könnte, jedoch wird im Folgenden der Einfachheit halber davon ausgegangen, dass die Fluidströmung wie angegeben fließt. In dem Ventilkäfig 21 bzw. dem Drosselkolben 11b sind mehrere Kanäle 41 vorgesehen, die sich von der stromaufwärtigen zur stromabwärtigen Außenfläche des jeweiligen Drosselkörpers erstrecken.

Derartige erfindungsgemäße Drosselkörper sind durch generative Herstellungsverfahren, wie Laser-Sintern, oder 3D-Drucken, oder durch Kernausschmelzverfahren hergestellt.

In Figur 1a ist der Ventilkäfig 21 im Wesentlichen hülsenförmig und umgibt das Ventilglied 11 in Form eines Ventilkolbens 11a vollumfänglich. Der maximale Außendurchmesser des Ventilkolbens 11a ist geringfügig kleiner als der Innendurchmesser des hülsenförmigen Ventilkäfigs 21 im Bereich der Kanäle 41, so dass beim Fahren des Ventilkolbens 11a aus seiner geschlossenen, mit dem Ventilsitz 5 abdichtenden, in Figur 1a dargestellten Position, die Stellung des Ventilglieds, d.h. des Ventilkolbens 11a, nur allmählich den Durchfluss durch die Kanäle 41 freigibt. Insbesondere sind die radial innenseitig an dem Ventilkäfig 21 angeordneten Öffnungen der Kanäle 41, also bei der angezeigten Strömungsrichtung S die Kanalaustritte, in Axialrichtung des Ventilkäfigs 21 zueinander versetzt angeordnet, so dass der von dem Ventilglied 11 freigegebene Durchströmungsquerschnitt der Kanäle 41 möglichst gleichförmig vergrößert werden kann. Es sei klar, dass die Bauart des Ventils, das in Figur 1a beispielsweise mit kolbenförmigem Ventilglied 11 (Ventilkolben 11a) dargestellt ist, im Hinblick auf den erfindungsgemäßen Drosselkörper nur eine untergeordnete Rolle spielt.

Der Ventilkäfig 21 ist an dem Ventilgehäuse 3 gehalten und definiert aufgrund seiner Hülsenform eine Hülsenmittelachse 25, die mit der Ventilgliedachse vorzugsweise übereinstimmt. Zu diesem Zweck kann der Ventilkäfig 21 an einem ersten axialen Ende mit dem Ventilsitz 5 kooperieren, wobei der Ventilsitz 5 eine Abdichtung zwischen dem Strömungsbereich vor und hinter dem Ventilglied bilden kann. An dem zweiten axialen Ende des Ventilkäfigs 21 kann ein in Radialrichtung 27 auskragender Flansch 23 vorgesehen sein, um den Ventilkäfig 21 gegenüber dem Ventilgehäuse 3 abzustützen.

Die in Figur 1b dargestellte Ausführung unterscheidet sich von der gemäß Figur 1a im Wesentlichen nur darin, dass der Drosselkörper durch ein Ventilglied 11 in Form eines Drosselkolbens 11b realisiert ist und dass anstelle eines Ventilkäfigs 21 eine Drosselkolbenführung 21b ortsfest an dem Ventilgehäuse 3 montiert ist.

Bei der Ausführung gemäß Figur 1a ist also der Drosselkörper ortsfest am Ventilgehäuse 3 angeordnet, wohingegen bei der Ausführung gemäß Figur 1b der Drosselkörper relativ zu dem Ventilgehäuse 3 beweglich gelagert ist. Bei beiden Ausführungen gemäß Figur 1a und Figur 1b wird, wie oben beschrieben, bei einem Fahren des Ventilglieds 11 in Axialrichtung aus der geschlossenen, mit dem Ventilsitz 5 abdichtenden, auch in Figur 1b dargestellten, Position nur allmählich der Durchfluss durch die Kanäle 41 wirksam freigegeben. Auch bei der in Figur 1b gezeigten Ausführung können die radial außenseitig an dem Drosselkolben 11b angeordneten Öffnungen der Kanäle 41, also bei der angezeigten Strömungsrichtung S die Kanalaustritte, in Axialrichtung des Drosselkolbens 11b zueinander versetzt angeordnet, so dass der von dem Ventilsitz 5 bzw. der Drosselkolbenführung 21b freigegebene Durchströmungsquerschnitt der Kanäle 41 möglichst gleichförmig vergrößert werden kann.

Es sei klar, dass die Kanäle des Drosselkolbens 11b, bei denen sich Ein- und Ausgang, wie in Figur 1b gezeigt, im Eintrittsbereich 7 des Ventils 1 befinden, nicht als wirksam freigegeben zu verstehen sind, sondern nur solche Kanäle 41, bei denen ein Kanaleintritt zu dem Eintrittsbereich 7 des Ventils 1 hin freiliegt und ein Kanalaustritt zu dem Austrittsbereich 9 des Ventils 1 hin freiliegt (in den Figuren 1a und 1b nicht dargestellt) als wirksam freigegeben gelten, denn nur dann findet eine in Strömungsrichtung S vom Eintrittsbereich 7 des Ventils 1 durch die Kanäle 41 des Drosselkörpers hin zum Austrittsbereich 9 des Ventils 1 statt. Der Drosselkolben 11b hat einen drosselungsaktiven Axialabschnitt 14, in dem die Kanäle 41 angeordnet sind.

Der Drosselkolben 11b bildet einen im Wesentlichen rotationssymmetrischen Körper bezüglich der Hülsenachse 25 und ist U-förmig bzw. H-förmig in einem Radialebenenquerschnitt. Die in Figur 1b gezeigte Ausführung hat einen H-förmigen Drosselkolben 11b mit drosselungspassiven Axialabschnitten 15 ohne Kanäle 41, welcher mit der Drosselkolbenführung 21b zur Axialführung und zum Abdichten zusammenwirkt. Außerdem hat der H-förmige Drosselkolben 11b einen scheibenförmigen Verbindungsabschnitt 17, der den Mittelbalken der H-Form bildet, um die rohr- oder hülsenförmige Außenwandung des Drosselkolbens mit der Ventilstange 13 zu verbinden. Bei der dargestellten H-förmigen Ausgestaltung des Drosselkolbens 11b sind in dem Scheibenabschnitt 16 Druckausgleichsbohrungen 17 vorgesehen, die eine Bewegung des Drosselkolbens 11b in dessen Axialrichtung im Wesentlichen frei von einem Druckgradient über den Scheibenabschnitt 16 erlauben. Auf diese Weise ist nur eine besonders niedrige Stellkraft des (nicht dargestellten) Stellantriebs zur Bewegung des Drosselkolbens 11b, d.h. zum Öffnen und/oder Schließen des Ventils 1, erforderlich. Bei einer (nicht dargestellten) alternativen Ausführung eines Drosselkolbens 11b in U-Form fiele der obere drosselungspassive Hülsenabschnitt 15 weg und damit notwendigerweise auch die Druckausgleichsbohrungen 17 in dem Scheibenabschnitt 16, weil dann der Scheibenabschnitt 16 im geschlossenen Ventilzustand eine fluiddichte Barriere zwischen dem Eintrittsbereich 7 und dem Austrittsbereich 9 des Ventils zu bilden hätte.

Um eine gute Dichtwirkung an den relativ zueinander beweglichen Oberflächen des Ventilglieds 11 und des Ventilgehäuses 3 zu bilden, können an dem Ventilglied 11 und/oder an dem mit dem Ventilglied 11 kooperierende Oberflächen des Ventilgehäuses 3 Dichtungen vorgesehen sein. Wie in Figur 1b gezeigt, kann beispielsweise an dem oberen drosselungspassiven Abschnitt 15 des Drosselkolbens 11b ein Dichtungsring 18 markiert sein, der in einem Berührkontakt mit der oberen Drosselkolbenführung 21b steht.

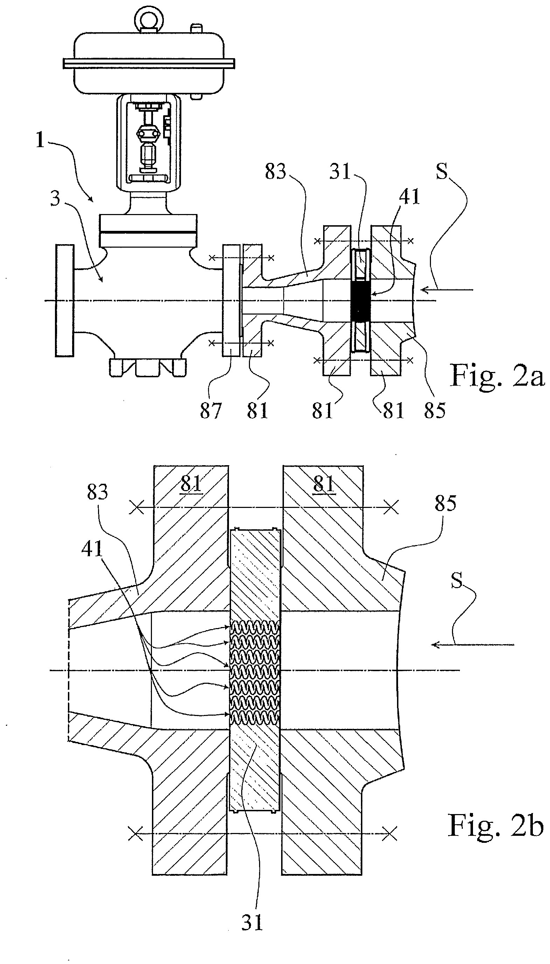

Figur 2a zeigt ein Stellgerät mit einem Stellventil 1, dessen Ventilgehäuse 3 in Figur 2a nicht geschnitten dargestellt ist, und einem in Strömungsrichtung S dem Ventil 1 vorgelagerten, nicht erfindungsgemäßen Drosselkörper in Form einer Festdrossel 31. Wie schon bei den vorherigen Figuren 1a und 1b kann die Strömungsrichtung alternativ umgekehrt verlaufen und somit die Festdrossel 31 einem Ventil 3 in Strömungsrichtung nachgelagert sein (nicht dargestellt). Eine dem Ventil 1 vorgelagerte Festdrossel 31 ist insofern vorteilhaft, als eine Druckreduktion in dem Prozessfluid bei geöffnetem Ventil bereits vor dem Ventil 1 erfolgt, so dass insbesondere beim Schließen des Ventils die darin auftretenden Druckänderungen gering gehalten werden können. Wie in Figur 2b im Detail dargestellt, kann eine Festdrossel 31 durch ein scheiben- oder blockförmiges Material gebildet sein, das bereichsweise Kanäle 41 aufweist. Eine Festdrossel 31 kann beispielsweise zwischen zwei Rohrflanschen 81 von Rohren 83, 85 zum Führen des Prozessfluids angeordnet und gehalten sein.

Es sei klar, dass die Darstellungen in Figur 2a und 2b nur schematisch sind und zwischen der Festdrossel 31 und den Rohrflanschenden 81 neben den skizzierten Verbindungsschrauben beispielsweise Dichtscheiben und/oder Zentriermittel (nicht dargestellt) vorgesehen sein können, um einen passgenauen, abdichtenden Sitz der Festdrossel 31 zwischen den Rohrflanschenden 81 zu gewährleisten. Ferner sei klar, dass eine Festdrossel auch alternativ zwischen einem Flansch 87 des Ventilgehäuses 3 und einem damit verbundenen Rohrendflansch 81 gehalten sein kann (nicht dargestellt).

Wie in den Figuren 2a und 2b gezeigt, kann in Strömungsrichtung S hinter der Festdrossel 31 ein sich verjüngendes Rohr 83 angeordnet sein. Der sich verjüngende Querschnitt des Rohrs 83 kann zur Anpassung der Fließgeschwindigkeit des Prozessfluids ausgelegt sein.

Vorzugsweise sind die Kanäle 41 eines Drosselkörpers deckungsgleich, wie in den Figuren 1a, 1b, 2a und 2b dargestellt. Ein Drosselkörper kann aber auch unterschiedlich geformte Kanäle aufweisen, beispielsweise können bei einem Ventilkäfig 21 die Kanäle 41, die bereits bei geringfügig geöffnetem Ventilglied 11 freigegeben sind, eine kleinere Kanalquerschnittsfläche haben als später freigegebene Kanäle 41. Ein erfindungsgemäßer Drosselkörper kann durchaus auch Kanäle ohne Raumspiralabschnitt aufweisen (nicht dargestellt). Bei einer besonderen bevorzugten Ausführungsform umfassen allerdings alle Kanäle eines erfindungsgemäßen Drosselkörpers jeweils zumindest einen Raumspiralabschnitt.

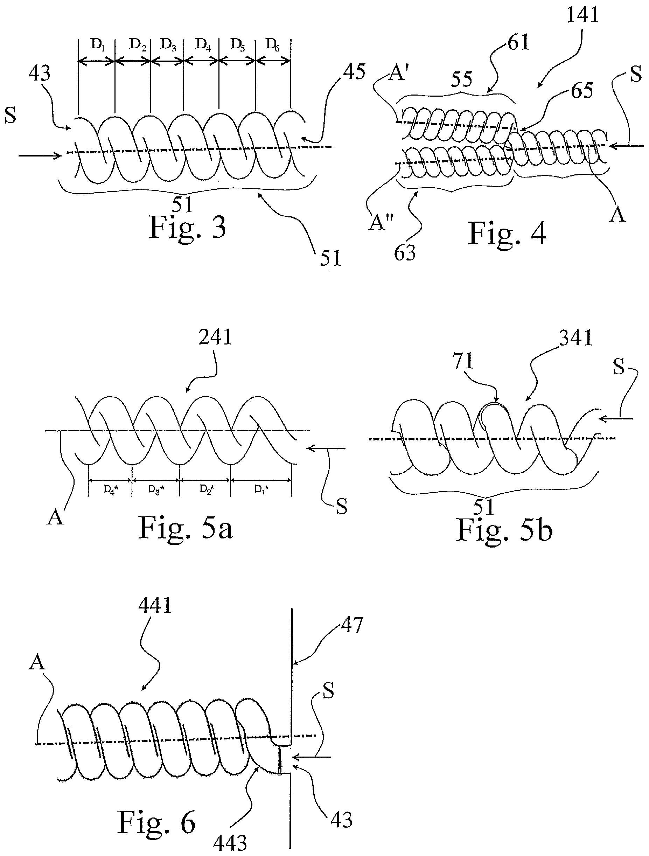

Wie in den Figuren 1a, 1b, 2a und 2b dargestellt, kann ein Kanal genau einen Raumspiralabschnitt aufweisen, der sich vom Kanaleintritt 43 bis hin zum Kanalaustritt 45 unterbrechungsfrei erstreckt. Ein derartiger Kanal 41 ist im Detail in Figur 3 dargestellt.

Der Kanal 41 gemäß Figur 3 hat in seinem schraubenartig gewundenen Verlauf vom Kanaleintritt 43 zum Kanalaustritt 45 sieben Windungen, das heißt, dass das Fluid während es den Kanal 41 vom Kanaleintritt 43 zum Kanalaustritt 45 durchströmt, sieben Drehungen um die Schraubenachse A des Kanals 41 ausführt. Die Steigung des in Figur 3 dargestellten Kanals 41 ist gleichbleibend. Dies lässt sich daran erkennen, dass die Abstände D₁, D₂, D₃, D₄, D₅ und D₆ zweier benachbarter Windungen alle gleich groß sind, während die Krümmung des Kanalverlaufs konstant bleibt. Aufgrund der konstanten Krümmung des Kanals 41 in Figur 3 fallen die Krümmungsmittelpunkte des Kanalverlaufs mit der Schraubenachse A zusammen.

Bei der bevorzugten Ausführung eines Drosselkörpers gemäß Figur 1 mit Kanälen gemäß Figur 3 ist die Schraubenachse A geradlinig und verläuft im Wesentlichen radial zu der Symmetrieachse 25 des hülsenförmigen Ventilkäfigs 21 und kann, wie dargestellt, im Wesentlichen in einer Ebene senkrecht zur Achse des Ventilkäfigs 21 liegen. Gegenüber einer Fläche senkrecht zur Achse des Ventilkäfigs 21 kann die Schraubenachse A eines Kanals 41 aber auch angewinkelt verlaufen, so dass die Strecke des Kanals durch den Drosselkörper gegenüber einer nicht angewinkelten Orientierung der Schraubenachse A vergrößert ist. Der Querschnitt eines Kanals kann vorzugsweise kreisförmig sein.

Figur 4 zeigt eine besondere Ausführung eines Kanals 141, der im Strömungsverlauf zunächst einen Raumspiralabschnitt 51 hat und sich anschließend in zwei Kanalfortsätze 61, 63 aufgabelt. Der in Figur 4 dargestellte Kanal 141 hat einen rechtsgängigen Raumspiralabschnitt 51. In einem der Kanalfortsätze 63 kann sich die rechtsgängige Windung in einem Raumspiralabschnitt 53 des Kanalfortsatzes 63 rechtsgängig und in einem Raumspiralabschnitt 55 des anderen Kanalfortsatzes 61 linksgängig fortsetzen. Auf diese Weise kann die Gabelung 65 des Kanals 141 besonders gut im Hinblick auf die Vermeidung von Kavitation in dem Kanal 141 ausgelegt sein. Wie in Figur 4 zu erkennen ist, sind die Querschnitte der Kanalfortsätze 61, 63 im Wesentlichen gleich groß und kleiner als der Querschnitt des Kanals 141 vor der Gabelung 65. Vorzugsweise kann die Summe der Querschnittsflächen der Kanalfortsätze 61 und 63 hinter der Gabelung 65 der Querschnittsfläche des Kanals 141 vor der Gabelung 65 entsprechen. Insbesondere ist die Fläche der Querschnitte der Kanalfortsätze 61 und 63 zumindest genauso groß wie die Querschnittsfläche des Kanals 141 vor der Gabelung 65. Bei einer bevorzugten Variante ist die Summe der Querschnittsflächen der Kanalfortsätze 61 und 63 hinter der Gabelung 65 größer als die Querschnittsfläche des Kanals 141 vor der Gabelung 65 und/oder wächst nach der Gabelung 65 insbesondere mit einer konstanten Zunahme pro Windung an. Ähnlich dem in Figur 3 dargestellten Kanal 41 ist der Kanal 141 vor der Gabelung 65 schraubenförmig mit konstanter Krümmung und konstanter Steigung um eine Schraubenachse A. Auch die Raumspiralabschnitte 53 bzw. 55 der Kanalfortsätze 63 bzw. 61 sind schraubenartig und verlaufen gedreht um eine jeweilige Schraubenachse A" bzw. A'. Die Schraubenachse A" eines Kanalfortsatzes kann parallel zu der Schraubenachse A des Kanals 141 vor der Gabelung 65 sein, die Schraubenachse A' eines Kanalfortsatzes kann aber auch schräg zu der Schraubenachse A des Kanals 141 vor der Gabelung 65 orientiert sein. Erfindungsgemäße Drosselkörper mit Kanälen 141, die sich in zumindest zwei Kanalfortsätze 61, 63 aufgabeln, eignen sich insbesondere für hülsenförmige Ventilkäfige 21 oder Drosselkolben 11b, bei denen die Strömungsrichtung gemäß der in den Figuren 1a oder 1b dargestellten Strömungsrichtung S, also von innen nach außen, in Radialrichtung 27 durch den Ventilkäfig 21 bzw. den Drosselkolben 11b verläuft, weil das Volumen des Drosselkörpers in Radialrichtung zunimmt, so dass hier ausreichend Raum für eine Aufgabelung der Kanäle 141 vorhanden ist.

In den Figuren 5a und 5b sind die Raumspiralabschnitte 51 von Kanälen 241, 341 dargestellt, deren Steigung im Kanalverlauf kleiner wird, was daran zu erkennen ist, dass der Abstand, beispielsweise D₁*, D₂*, D₃* und D₄*, zweier aufeinander folgender Windungen abnimmt. Der Querschnittsfläche und der Abstand des Kanals 241 zu der Spiralachse A im Raumspiralbereich 51 ist im dargestellten Verlauf des Kanals 241 konstant.

Der in Figur 5b dargestellte Raumspiralabschnitt 51 des Kanals 341 unterscheidet sich von dem Raumspiralabschnitt 51 des Kanals 241 dadurch, dass die Querschnittsfläche des Kanals 341 in dessen Verlauf größer wird. Die Querschnittsfläche des Kanals 341 vergrößert sich weitestgehend kontinuierlich. Im Verlauf des Kanals 341 vom Kanaleintritt zum Kanalaustritt kann sich dessen Querschnittsfläche aber auch stellenweise sprungartig ändern, so dass der Kanal eine Stufe 71 aufweist. Insbesondere sind Stufen 71 derart in Abhängigkeit vom stromaufwärtigen Kanalquerschnitt, von den Fluideigenschaften, der Fluidgeschwindigkeit und dem Fluiddruck bemessen, dass die Druckänderung an der Stufe 71 keine Kavitation zur Folge hat. Vorzugsweise ist ein Kanal mit einer Querschnittsfläche, die sich im Verlauf des Kanals ändert, jedoch frei von Stufen, Innenkontursprüngen, Knicken oder dergleichen.

Eine besondere bevorzugte Ausführungsform eines Kanals 441 eines erfindungsgemäßen Drosselkörpers ist in Figur 6 dargestellt, bei der der Kanalverlauf am Kanaleintritt im Wesentlichen lotrecht zur benachbarten Drosselkörperaußenfläche 47 orientiert ist. Im weiteren Verlauf des Kanals 441 nimmt die Krümmung entlang einer Kanaleingangsstrecke 443 zum Raumspiralabschnitt 51 hin zu. In dem Raumspiralabschnitt 51 des Kanals 441 verläuft der Kanal erneut schraubenartig um eine Schraubenachse A. Der Kanalaustritt des Kanals 441 ist nicht dargestellt, jedoch sei klar, dass der Verlauf des Kanals 441 an seinem Kanalaustritt zunächst eine streckenweise geringer werdende Krümmung aus dem Raumspiralabschnitt 51 hinaus zum Kanalaustritt aufweisen kann, so dass der Kanalverlauf am Kanalaustritt gegenüber der dort benachbarten Drosselkörperaußenfläche erneut im Wesentlichen lotrecht sei kann.

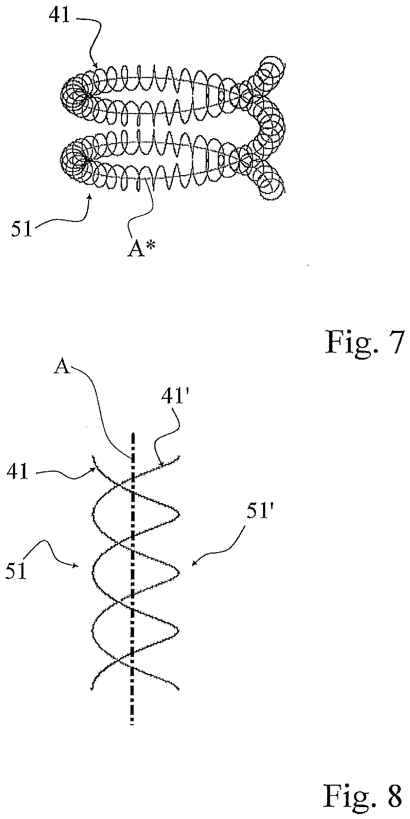

Figur 7 zeigt einen Raumspiralabschnitt einer besonderen bevorzugten Ausführung eines Kanals eines erfindungsgemäßen Drosselkörpers. Bei dieser besonderen Ausführung verläuft der Kanal in seinem Raumspiralabschnitt helixartig um eine Spiralachse A* herum gewunden, wobei die Spiralachse A* selbst nicht geradlinig, sondern gekrümmt, vorzugsweise ebenfalls schrauben- oder helixartig verläuft. Ein Drosselkörper mit derartigen Kanälen kann über eine einzige Drosselstufe, also mit nur einem Drosselkörper, einen sehr großen Druckabfall nur durch Wandreibung in dem Kanal erzeugen, weil ein raumspiralartiger Kanal, der um eine Spiral- oder Schraubenachse gewunden ist, welche selbst keinem geradlinigen, sondern einem räumlich gekrümmten und vorzugsweise sogar gewundenem Pfad folgt, eine Kanallänge zu erreichen erlaubt, die erheblich größer ist als die Wanddicke des Drosselkörpers.

In Figur 8 sind die Raumspiralabschnitte 51 und 51' umeinander und vorzugsweise um eine gemeinsame Spiralachse gewunden. Die Windung zweier Raumspiralabschnitte 51 und 51' umeinander kann von Vorteil sein, wenn Raumspiralabschnitte mit einer Steigung vorgesehen sind, die ausreichend groß ist, so dass zwischen zwei benachbarten Windungen eines Kanals genügend Raum zum Einbringen eines weiteren Kanals in den Drosselkörper verbleibt. Genau wie Raumspiralabschnitte 51, 51' zweier Kanale 41, 41' können auch Kanalfortsätze 61 oder 63 umeinander gewunden sein, wobei die verwundenen Raumspiralabschnitte selbstverständlich gleichgängig sind, also entweder beide rechtsgängig oder beide linksgängig sein müssen. Insbesondere können auch drei, vier oder mehr Raumspiralabschnitte umeinander gewunden sein (nicht dargestellt).

Die in der vorstehenden Beschreibung, den Figuren und Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Ventil
- 3: Ventilgehäuse
- 5: Ventilsitz
- 7: Eintrittsbereich
- 9: Austrittsbereich
- 11: Ventilglied
- 11a: Ventilkolben
- 11b: Drosselkolben
- 13: Ventilstange
- 14: drosselungsaktiver Abschnitt
- 15: drosselungspassiver Abschnitt
- 16: Scheibenabschnitt
- 17: Druckausgleichsbohrung
- 18: Dichtungsring
- 21: Ventilkäfig
- 21b: Drosselkolbenführung
- 23: Flansch
- 25: Hülsenmittelachse
- 27: Radialrichtung
- 31: Festdrossel
- 41, 141, 241, 341, 441: Kanal
- 43,443: Kanaleintritt
- 45: Kanalaustritt
- 47: Drosselkörperaußenfläche
- 51: Raumspiralabschnitt
- 61,63: Kanalfortsatz
- 65: Gabelung
- 71: Stufe
- 81: Rohrendflansch
- 83, 85: Rohr
- 87: Ventilgehäuseflansch
- S: Strömungsrichtung
- A: Schraubenachse

## Patentansprüche

1. Drosselkörper in Form eines Ventilkäfigs oder eines Drosselkolbens zum Reduzieren des Fluiddrucks in einer Prozessfluidleitung, umfassend mehrere sich von einem stromaufwärtigen Kanaleintritt (43) zu einem stromabwärtigen Kanalaustritt (45) verlaufende Kanäle (41, 141, 241, 341, 441), wobei der Drosselkörper durch ein generatives Herstellungsverfahren, wie Laser-Sintern oder 3D-Drucken, oder durch ein Kernausschmelzverfahren hergestellt ist, **dadurch gekennzeichnet, dass** ein zumindest abschnittsweise gekrümmter Verlauf wenigstens eines der mehreren Kanäle zwischen dem Kanaleintritt (43) und dem Kanalaustritt (45) von einer ebenen Erstreckung abweicht, und dass wenigstens der zumindest abschnittsweise gekrümmte Verlauf des wenigstens einen Kanals (41, 141, 241, 341, 441) kontinuierlich frei von Innenkontursprüngen und/oder -stufen (71) und/oder -knicken ist.

2. Drosselkörper nach Anspruch 1, **dadurch gekennzeichnet, dass** sich der zumindest abschnittsweise gekrümmte Verlauf des wenigstens einen Kanals (41, 141, 241, 341, 441) längs einer Raumlinie im Drosselkörper um eine geradlinige Windungsachse (A) windet.

3. Drosselkörper nach Anspruch 2, **dadurch gekennzeichnet, dass** ein Radialabstand zwischen der Windungsachse und der Raumlinie konstant ist und/oder sich in Axialrichtung kontinuierlich erhöht und/oder verringert, wobei eine Windungskrümmung und/oder eine Windungssteigung relativ zur Axialrichtung konstant ist und/oder sich erhöht und/oder verringert.

4. Drosselkörper nach einem der vorstehenden Ansprüche, **dadurch gekennzeichnet, dass** der zumindest abschnittsweise gekrümmte Verlauf des wenigstens einen Kanals (41, 141, 241, 341, 441) raumspiralförmig ist.

5. Drosselkörper nach Anspruch 1 oder 4, **dadurch gekennzeichnet, dass** der zumindest abschnittsweise Verlauf des wenigstens einen Kanals (41, 141, 241, 341, 441) zumindest eine voll umlaufende Windung um eine Windungsachse umfasst, wobei der zumindest abschnittsweise gekrümmte Verlauf einer zylindrischen Raumspiralform folgt.

6. Drosselkörper nach einem der vorigen Ansprüche, **dadurch gekennzeichnet, dass** der Verlauf des wenigstens einen Kanals (41, 141, 241, 341, 441) zumindest kanaleintrittseitig geradlinig, raumspiralförmig mit zunehmendem oder abnehmenden Radialabstand oder schraubenförmig ist und/oder der Verlauf zumindest austrittseitig schraubenförmig, raumspiralförmig mit abnehmendem oder zunehmenden Radialabstand oder geradlinig ist, wobei in einem Mittelabschnitt des Verlaufs wenigstens eine vollständige Windung vorgesehen ist.

7. Drosselkörper nach einem der vorigen Ansprüche, **dadurch gekennzeichnet, dass** der zumindest abschnittsweise gekrümmte Verlauf des wenigstens einen Kanals (41, 141, 241, 341, 441) raumspiralförmig ist und einen Bereich abnehmender und/oder zunehmender Steigung und/oder konstanter Schraubensteigung aufweist

8. Drosselkörper nach einem der vorigen Ansprüche, **dadurch gekennzeichnet, dass** der Verlauf des wenigstens einen Kanals (41, 141, 241, 341, 441) zumindest kanaleintrittseitig raumspiralförmig mit zunehmender oder abnehmender Krümmung ist und/oder dass der Verlauf zumindest austrittseitig raumspiralförmig mit abnehmender oder zunehmender Krümmung ist, wobei in einem Mittelabschnitt des Verlaufs wenigstens eine vollständige Windung vorgesehen ist.

9. Drosselkörper nach einem der vorigen Ansprüche, **dadurch gekennzeichnet, dass** der Verlauf des wenigstens einen Kanals (41, 141, 241, 341, 441) am Kanaleintritt (43) und/oder Kanalaustritt (45) lotrecht zu einer am Kanaleintritt (43) beziehungsweise am Kanalaustritt (45) angrenzenden Außenfläche (47) des Drosselkörpers liegt.

10. Drosselkörper nach einem der vorigen Ansprüche, **dadurch gekennzeichnet, dass** der wenigstens eine Kanal (41, 141, 241, 341, 441) einen kreisförmigen Kanalquerschnitt aufweist, wobei die Fläche des Kanalquerschnitts zwischen dem Kanaleintritt (43) und dem Kanalaustritt (45) zumindest abschnittsweise kontinuierlich zunimmt und/oder kontinuierlich abnimmt.

11. Drosselkörper nach einem der vorigen Ansprüche, **dadurch gekennzeichnet, dass** der wenigstens eine Kanal (141) sich in wenigstens zwei Kanaläste (61, 63) aufgabelt.

12. Drosselkörper nach Anspruch 11, **dadurch gekennzeichnet, dass** ein zumindest abschnittsweise gekrümmter Verlauf wenigstens eines der Kanaläste (61, 63) zwischen einer Kanalgabelung (65) und einer zweiten Kanalgabelung (65), einem Kanalaustritt (45) oder einem Kanaleintritt (43) von einer ebenen Erstreckung abweicht.

13. Drosselkörper nach einem der vorigen Ansprüche, **dadurch gekennzeichnet, dass** der zumindest abschnittsweise gekrümmte Verlauf von wenigstens zwei Kanälen (41, 141, 241, 341, 441) oder wenigstens zwei Kanalästen (61, 63) raumspiralförmig mit im Wesentlichen gleichem Radialabstand und/oder im Wesentlichen gleicher Steigung um einander und/oder um eine gemeinsame Windungsachse (A) gewunden ist.

14. Drosselkörper nach einem der vorigen Ansprüche, **dadurch gekennzeichnet, dass** der Drosselkörper frei ist von geradlinigen Kanälen und/oder Kanälen ist, deren Verlauf nicht von einer ebenen Erstreckung abweicht, und/oder alle Kanäle (41, 141, 241, 341, 441) des Drosselköpers im Wesentlichen deckungsgleich sind.

15. Drosselkörper nach einem der vorigen Ansprüche, **dadurch gekennzeichnet, dass** der Drosselkörper zwei wenigstens bezüglich deren jeweiligen Festigkeit, Härte und/oder Verschleißwiderstand unterschiedliche Werkstoffe umfasst, wobei wenigstens einer der mehreren Kanäle aus einem der zwei Werkstoffe gebildet ist und wenigstens ein anderer der mehreren Kanäle aus einem anderen der zwei Werkstoffe gebildet ist, oder ein Kanal durch zwei Werkstoffe gebildet ist.

## Claims

1. A throttle body in the shape of a valve cage or a throttle piston for reducing the fluid pressure with a plurality of channels (41, 141, 241, 341, 441) extending from an upstream channel inlet (43) to a downstream channel outlet (45), wherein the throttle body is manufactured by means of generative manufacturing methods, such as laser sintering, 3D printing, or the like, or by means of injection methods, **characterized in that** a course being at least section-wisely curved of at least one of the plurality of channels deviates from a two-dimensional extension between the channel inlet (43) and the channel outlet (45) and **in that** the course being at least section-wisely curved of the at least one channel (41, 141, 241, 341, 441) is continuous free of inner contour springs and/or steps (71) and/or kinks.

2. The throttle body according to claim 1, **characterized in that** the course being at least section-wisely curved of the at least one channel (41, 141, 241, 341, 441) winds along a dimension line in the throttle body around a particularly straight winding axis (A).

3. The throttle body according to claim 2, **characterized in that** a radial distance between the winding axis and the dimension line is constant and/or continuously increases in an axial direction and/or decreases, wherein a winding curvature and/or a winding gradient relative to the axial direction is constant and/or increases and/or decreases.

4. The throttle body according to one of the preceding claims, **characterized in that** the course being at least section-wisely curved of the at least one channel (41, 141, 241, 341, 441) is three-dimensional spiral-shaped.

5. The throttle body according to claim 1 or 4, **characterized in that** the course being at least section-wisely curved of the at least one channel (41, 141, 241, 341, 441) comprises at least one complete circumferential winding around a winding axis, wherein the at least section-wise course follows a cylindric three-dimensional spiral shape.

6. The throttle body according to any of the preceding claims, **characterized in that** the course of the at least one channel (41, 141, 241, 341, 441) is at least at the channel inlet straight, three-dimensional spiral-shaped with an increasing or decreasing radial distance or helical-shaped and/or the course is at least at the channel outlet helical-shaped, three-dimensional spiral-shaped with a decreasing or an increasing radial distance or straight, wherein in a middle section of the course at least one complete winding is provided.

7. The throttle body according to any of the preceding claims, **characterized in that** the course being at least section-wisely curved of the at least one channel (41, 141, 241, 341, 441) is three-dimensional spiral-shaped and comprises an area of a decreasing and/or increasing gradient and/or a constant screw gradient.

8. The throttle body according to any of the preceding claims, **characterized in that** the course of the at least one channel (41, 141, 241, 341, 441) is at least at the channel inlet three-dimensional spiral-shaped with an increasing or decreasing curvature and/or **in that** the course is at least at the channel outlet three-dimensional spiral-shaped with a decreasing or an increasing curvature, wherein in a middle section of the course at least one complete winding is provided.

9. The throttle body according to any of the preceding claims, **characterized in that** the course of the at least one channel (41, 141, 241, 341, 441) at the channel inlet (43) and/or channel outlet (45) is perpendicular with regard to an outer surface (47) of the throttle body adjacent the channel inlet (43) respectively channel outlet (45).

10. The throttle body according to any of the preceding claims, **characterized in that** the at least one channel (41, 141, 241, 341, 441) comprises a circular channel cross-section, wherein the area of the channel cross-section between the channel inlet (43) and the channel outlet (45) at least section-wisely continuously increases and/or particularly continuously decreases.

11. The throttle body according to any of the preceding claims, **characterized in that** the at least one channel (141) divides into at least two channel limbs (61, 63).

12. The throttle body according to claim 11, **characterized in that** a being at least section-wisely curved of at least one of the channel limbs (61, 63) between a channel fork (65) and a second channel fork (65), a channel outlet (45) or a channel inlet (43) deviates from a two-dimensional extension.

13. The throttle body according to any of the preceding claims, **characterized in that** the course being at least section-wisely curved of at least two channels (41, 141, 241, 341, 441) or at least two channel limbs (61, 63) is wound three-dimensional spiral-shaped with essentially the same radial distance and/or essentially the same gradient around each other and/or around a common winding axis (A).

14. The throttle body according to any of the preceding claims, **characterized in that** the throttle body is free of straight channels and/or channels which course does not deviate from a two-dimensional extension and/or **in that** all channels (41, 141, 241, 341, 441) of the throttle body are essentially congruent.

15. The throttle body according to any of the preceding claims, **characterized in that** the throttle body comprises two different materials at least with regard to their respective stability, rigidity and/or wear-resistance, wherein at least one of the plurality of channels is made from one of the two materials and at least another of the plurality of channels is made from another of the two materials, or one channel is made of two materials.

## Revendications

1. Corps d'étranglement sous forme de cage de soupape ou de piston d'étranglement, destiné à réduire la pression fluidique dans une conduite de fluide de processus, comportant plusieurs canaux (41, 141, 241, 341, 441) s'étendant à partir d'une entrée de canal (43) en amont jusqu'à une sortie de canal (45) en aval, le corps d'étranglement étant fabriqué à l'aide d'un procédé de fabrication génératif, tel que le frittage au laser ou l'impression 3D, ou à l'aide d'un procédé de fusion de noyau, **caractérisé en ce qu'**un tracé courbe au moins par tronçons de l'un au moins parmi la pluralité de canaux dévie d'une extension plane entre l'entrée de canal (43) et la sortie de canal (45), et **en ce qu'**au moins le tracé courbe au moins par tronçons de l'au moins un canal (41, 141, 241, 341, 441) est continuellement exempt de discontinuités et/ou de gradins (71) et/ou de coudes dans le contour intérieur.

2. Corps d'étranglement selon la revendication 1, **caractérisé en ce que** le tracé courbe au moins par tronçons de l'au moins un canal (41, 141, 241, 341, 441) serpente autour d'un axe d'enroulement rectiligne (A) le long d'une ligne spatiale dans le corps d'étranglement.

3. Corps d'étranglement selon la revendication 2, **caractérisé en ce qu'**une distance radiale entre l'axe d'enroulement et la ligne spatiale est constante et/ou augmente et/ou diminue continuellement dans la direction axiale, dans lequel une courbure d'enroulement et/ou une inclinaison d'enroulement par rapport à la direction axiale est/sont constante(s) et/ou augmente/augmentent et/ou diminue/ diminuent.

4. Corps d'étranglement selon l'une des revendications précédentes, **caractérisé en ce que** le tracé courbe au moins par tronçons de l'au moins un canal (41, 141, 241, 341, 441) présente une forme de spirale spatiale.

5. Corps d'étranglement selon la revendication 1 ou 4, **caractérisé en ce que** le tracé courbe au moins par tronçons de l'au moins un canal (41, 141, 241, 341, 441) comporte au moins un enroulement périphérique complet autour d'un axe d'enroulement, dans lequel l'au moins un tracé courbe au moins par tronçons suit une forme de spirale spatiale cylindrique.

6. Corps d'étranglement selon l'une des revendications précédentes, **caractérisé en ce que** le tracé de l'au moins un canal (41, 141, 241, 341, 441) est, au moins du côté de l'entrée de canal, rectiligne, en forme de spirale spatiale avec une distance radiale croissante ou décroissante ou hélicoïdal et/ou le tracé est, au moins du côté de la sortie, hélicoïdal, en forme de spirale spatiale avec une distance radiale croissante ou décroissante ou rectiligne, dans lequel au moins un enroulement périphérique complet est prévu dans un tronçon central du tracé.

7. Corps d'étranglement selon l'une des revendications précédentes, **caractérisé en ce que** le tracé courbe au moins par tronçons de l'au moins un canal (41, 141, 241, 341, 441) est en forme de spirale spatiale et présente une région avec une inclinaison décroissante et/ou croissante et/ou avec un pas de spire constant.

8. Corps d'étranglement selon l'une des revendications précédentes, **caractérisé en ce que** le tracé courbe au moins par tronçons de l'au moins un canal (41, 141, 241, 341, 441) est, au moins du côté de l'entrée de canal, en forme de spirale spatiale avec une courbure croissante ou décroissante et/ou **en ce que** le tracé est, au moins du côté de la sortie, en forme de spirale spatiale avec une courbure décroissante ou croissante, dans lequel au moins un enroulement périphérique complet est prévu dans un tronçon central du tracé.

9. Corps d'étranglement selon l'une des revendications précédentes, **caractérisé en ce qu'**à l'entrée de canal (43) et/ou à la sortie de canal (45), le tracé de l'au moins un canal (41, 141, 241, 341, 441) s'étend perpendiculairement à une surface extérieure (47) du corps d'étranglement adjacente à l'entrée de canal (43) ou à la sortie de canal (45).

10. Corps d'étranglement selon l'une des revendications précédentes, **caractérisé en ce que** l'au moins un canal (41, 141, 241, 341, 441) présente une section transversale de canal circulaire, dans lequel la surface de la section transversale de canal augmente continuellement et/ou diminue continuellement au moins par tronçons entre l'entrée de canal (43) et la sortie de canal (45).

11. Corps d'étranglement selon l'une des revendications précédentes, **caractérisé en ce que** l'au moins un canal (141) se ramifie en au moins deux branches de canal (61, 63).

12. Corps d'étranglement selon la revendication 11, **caractérisé en ce qu'**un tracé courbe au moins par tronçons de l'une au moins des branches de canal (61, 63) dévie d'une extension plane entre une ramification de canal (65) et une deuxième ramification de canal (65), une sortie de canal (45) ou une entrée de canal (43).

13. Corps d'étranglement selon l'une des revendications précédentes, **caractérisé en ce que** les tracés courbes au moins par tronçons d'au moins deux canaux (41, 141, 241, 341, 441) ou d'au moins deux branches de canal (61, 63) sont enroulés en forme de spirale spatiale avec une distance radiale essentiellement égale et/ou avec une inclinaison essentiellement égale, l'un autour de l'autre et/ou autour d'un axe d'enroulement commun (A).

14. Corps d'étranglement selon l'une des revendications précédentes, **caractérisé en ce que** le corps d'étranglement est exempt de canaux rectilignes et/ou de canaux dont le tracé ne dévie pas d'une extension plane, et/ou tous les canaux (41, 141, 241, 341, 441) du corps d'étranglement sont essentiellement congruents.

15. Corps d'étranglement selon l'une des revendications précédentes, **caractérisé en ce que** le corps d'étranglement comporte deux matériaux différents au moins quant à leur rigidité, leur dureté et/ou leur résistance à l'usure, dans lequel l'un au moins parmi la pluralité de canaux est constitué de l'un parmi les deux matériaux et au moins un autre parmi la pluralité de canaux est constitué d'un autre parmi les deux matériaux, ou dans lequel un canal est constitué de deux matériaux.
